# EUROPÄISCHE PATENTSCHRIFT

(11) **EP 3 959 117 B1**
(45) Veröffentlichungstag und Bekanntmachung des Hinweises auf die Patenterteilung: **07.06.2023**
(21) Anmeldenummer: 20717831.0
(22) Anmeldetag: 06.04.2020
(51) Int. Cl.: B62D 21/15, B62D 25/08

(54) **KAROSSERIE-VORBAUSTRUKTUR FÜR EIN FAHRZEUG**
BODY FRONT-END STRUCTURE FOR A VEHICLE
STRUCTURE D'AVANT-CORPS DE LA CARROSSERIE D'UN VÉHICULE

(30) Priorität: 26.04.2019 DE 102019206041
(43) Veröffentlichungstag der Anmeldung: 02.03.2022
(73) Patentinhaber: Volkswagen AG, 38440 Wolfsburg (DE)
(72) Erfinder: SCHMIDT, Gerhard, 38444 Wolfsburg (DE); UBALDO, Mario, 38448 Wolfsburg (DE); KRENGEL, Sören, 38446 Wolfsburg (DE)
(86) Internationale Anmeldenummer: PCT/EP2020/059726
(87) Internationale Veröffentlichungsnummer: WO 2020/216602

(56) Entgegenhaltungen:
- EP-A1- 1 834 862
- EP-A1- 3 395 655
- EP-B1- 1 834 862
- DE-A1-102014 219 433
- US-A1- 2014 292 028

## Beschreibung

Die Erfindung betrifft eine Karosserie-Vorbaustruktur für ein Fahrzeug nach dem Oberbegriff des Patentanspruches 1.

Bei einer Fahrzeugfrontalkollision mit nur geringfügiger seitlicher Überdeckung (small overlap) besteht die Problematik, dass die Kollisionskräfte nicht unmittelbar in den frontseitigen Stoßfänger-Querträger und weiter in die Karosserie-Längsträger eingeleitet werden. Vielmehr erfolgt bei dieser speziellen Unfallkonstellation die Krafteinleitung vorbei am Stoßfänger-Querträger über den seitlichen Karosserie-Oberbau, das heißt über die oberen Radhaus-Längsträger und über den Federbeindom, bis in den jeweiligen oberen A-Säulenknoten. Parallel dazu erfolgt die Krafteinleitung über das crashzugewandte Fahrzeugrad (das heißt dessen Felge) in die dahinter liegende, den Fahrzeuginnenraum begrenzende Stirnwand.

Aus der DE 10 2013 010 563 A1 ist eine beispielhafte Karosserie-Vorbaustruktur für ein Fahrzeug bekannt. Die Karosserie-Vorbaustruktur weist beidseitig angeordnete A-Säulen auf, von deren jeweiligen oberen A-Säulenknoten ein oberer Radhaus-Längsträger in der Fahrzeuglängsrichtung nach fahrzeugvorne abragt und von deren jeweiligen unteren A-Säulenknoten ein mit Bezug auf den oberen Radhaus-Längsträger nach fahrzeuginnen versetzter unterer Karosserie-Längsträger in der Fahrzeuglängsrichtung nach fahrzeugvorne abragt, wobei sich zwischen den beiden A-Säulen eine Querbaugruppe erstreckt, und in einem Inneneckbereich zwischen der Querbaugruppe und dem oberen Radhaus-Längsträger ein Federbeindom angeordnet ist, an dem sich in der Fahrzeuglängsrichtung nach fahrzeugvorne und in der Fahrzeughochrichtung nach fahrzeugunten ein, das Radhaus-Innere begrenzendes Radhaus-Blechteil anschließt, das den unteren Karosserie-Längsträger mit dem oberen Radhaus-Längsträger verbindet, wobei in einem Frontalcrash, insbesondere mit geringer seitlicher Überdeckung, der Federbeindom mit einer Crashkraft in der Fahrzeuglängsrichtung belastet ist.

Bei der oben angegebenen Unfallkonstellation wird aufgrund der geringfügigen seitlichen Überdeckung ein starker Crash-Impuls auf das Radhaus-Blechteil und auf den Federbeindom übertragen. Dies kann zu einer Intrusion an der A-Säule führen.

Aus der DE 10 2016 008 062 A1 ist ein Kraftwagenbug bekannt. Aus der EP 3 197 751 B1 und aus der DE 10 2014 219 433 A1 sind jeweils eine Karosserieanordnung für einen Vorderwagen eines Kraftfahrzeugs bekannt. Die EP 1 834 862 A1 offenbart eine gattungsgemäße Vorderwagenstruktur.

Die Aufgabe der Erfindung besteht darin, eine Karosserie-Vorbaustruktur bereitzustellen, die mit geringem fertigungstechnischen Mehraufwand bei einer Frontalkollision einen gesteigerten Abbau von Kollisionskräften gewährleistet.

Die Aufgabe ist durch die Merkmale des Patentanspruches 1 gelöst. Bevorzugte Weiterbildungen der Erfindung sind in den Unteransprüchen offenbart.

Gemäß dem kennzeichnenden Teil des Anspruches 1 weist die Karosserie-Vorbaustruktur ein Blech-Zugband auf. Das Blech-Zugband verbindet den Federbeindom kraftübertragend mit dem unteren Karosserie-Längsträger. Bei einem Frontalcrashfall mit geringer seitlicher Überdeckung stellt das Blech-Zugband einen Lastpfad bereit, über den eine, der Crashkraft entgegenwirkende Zugkraft auf den Federbeindom einwirkt, um eine crashbedingte Verlagerung des Federbeindoms nach fahrzeughinten zu vermeiden. Mit Hilfe des Blech-Zugbandes wird somit der Crash-Impuls teilweise auf den unteren Karosserie-Längsträger übertragen, der diesen aufnimmt und mittels Verformungsenergie abbaut. Auf diese Weise kann eine Intrusion an der A-Säule deutlich reduziert werden.

In einer technischen Umsetzung kann das Blech-Zugband an einer oberen Fügestelle am Federbeindom angebunden sein und an einer unteren Fügestelle am unteren Karosserie-Längsträger angebunden sein. Im Hinblick auf eine weitere Verstärkung der Vorbaustruktur ist es bevorzugt, wenn das Blech-Zugband an einer mittleren Fügestelle (das heißt zwischen den oberen und unteren Fügestellen) am Radhaus-Blechteil angebunden ist. Bevorzugt ist jede der Fügestelle durch eine Vielzahl von Punktschweißstellen realisiert. Besonders bevorzugt kann das Blech-Zugband und das Radhaus-Blechteil an der mittleren Fügestelle eine Doppelwandstruktur bilden, die das Radhaus-Blechteil verstärkt. Die Doppelwandstruktur kann sich durchgängig zwischen dem Federbeindom und dem unteren Karosserie-Längsträger erstrecken. In der Doppelwandstruktur kann das Radhaus-Blechteil und das Blech-Zugband großflächig miteinander in Anlage sein.

Zur weiteren Verstärkung der oben erwähnten Doppelwandstruktur kann ein Verstärkungs-Blechteil bereitgestellt sein. Dadurch ergibt sich ein Dreiblechaufbau, bei dem das Radhaus-Blechteil, das Blech-Zugband und das Verstärkungs-Blechteil miteinander, insbesondere in Punktschweißverbindung, verbunden sind. Der Dreiblechaufbau kann bevorzugt mit Abstand zur oberen Fügestelle und mit Abstand zur unteren Fügestelle angeordnet sein, um an der oberen/unteren Fügestelle einen fertigungstechnisch schwierig zu gestaltenden Vierblechaufbau zu vermeiden. Das Verstärkungs-Blechteil kann in Doppelfunktion als Tragkonsole wirken, das eine Funktionseinheit, insbesondere ein Antriebsaggregat, trägt. Im Hinblick auf eine im Crashfall einwandfreie Zugkraft-Übertragung auf den Federbeindom ist es bevorzugt, wenn der durch das Blech-Zugband bereitgestellte Lastpfad sich vom unteren Karosserie-Längsträger nach fahrzeughinten in Richtung obere Lenkerebene erstreckt, in der der Federbeindom angeordnet ist. In diesem Fall ergibt sich eine ausreichend große Zugkraft-Längskomponente, die der Crashkraft entgegenwirkt. Ein solcher Lastpfad ergibt sich, wenn die untere Fügestelle des Blech-Zugbands am unteren Karosserie-Längsträger um einen Längsversatz vor der oberen Fügestelle des Blech-Zugbands am Federbeindom angeordnet ist.

Der untere Karosserie-Längsträger ist in gängiger Praxis als ein Hohlprofil-Träger ausgebildet, und zwar mit einem U-Profilteil, das in der Fahrzeugquerrichtung nach fahrzeugaußen offen ist. Das U-Profilteil kann an einer oberen und an einer unteren Flanschverbindung mit einem äußeren Deckteil geschlossen sein. Das äußere Deckteil kann die obere Flanschverbindung mit einem Deckteil-Überstand nach fahrzeugoben überragen. In diesem Fall kann in der unteren Fügestelle der Deckteil-Überstand am Radhaus-Blechteil (insbesondere durch Punktschweißung) angebunden sein, und zwar mit einem freien Höhenversatz oberhalb der oberen Flanschverbindung des Karosserie-Längsträgers. Das Blech-Zugband, das Radhaus-Blechteil und der Deckteil-Überstand können in diesem Fall einen Dreiblechaufbau bilden, bei dem das Blech-Zugband, das Radhaus-Blechteil und der Deckteil-Überstand miteinander verbunden sind. Zusätzlich kann das Blech-Zugband zusammen mit der oberen Flanschverbindung des Karosserie-Längsträgers einen Dreiblechaufbau bilden, bei dem das Blech-Zugband, das Deckteil und das U-Profilteil miteinander verbunden sind.

Bei der oberen/unteren Flanschverbindung des Karosserie-Längsträgers sind jeweils die oberen/unteren Randflansche des U-Profilteils und des Deckteils miteinander (insbesondere durch Punktschweißen) verbunden.

Zur weiteren Verstärkung der Karosserie-Vorbaustruktur im Frontalcrashfall kann ein Verstärkungs-Blechteil vorgesehen sein, das separat vom Blech-Zugband den Federbeindom kraftübertragend mit dem unteren Karosserie-Längsträger verbindet.

Der Federbeindom kann als ein Blechformteil ausgeführt sein, und zwar mit einer horizontal ausgerichteten oberen Abstützbasis, an dem ein Federbein-Kopf abstützbar ist. Die obere horizontale Abstützbasis kann in der Fahrzeuglängsrichtung nach fahrzeugvorne in eine vertikale Federbein-Vorderwand übergehen, und in der Fahrzeugquerrichtung nach fahrzeuginnen in eine vertikale Federbeindom-Innenwand übergehen. Das Verstärkungs-Blechteil kann mit Abstand zum Blech-Zugband ausschließlich an der Federbeindom-Innenwand angebunden sein. Demgegenüber kann das Blech-Zugband sowohl an der Federbeindom-Innenwand als auch an der Federbeindom-Vorderwand angebunden sein. In diesem Fall umgreift das Blech-Zugband an der oberen Fügestelle eine Übergangskante zwischen der Federbeindom-Innenwand und der Federbeindom-Vorderwand.

Nachfolgend ist ein Ausführungsbeispiel der Erfindung anhand der beigefügten Figuren beschrieben.

Es zeigen:
- Figur 1: in einer grob schematischen Darstellung von oben einen Versuchsaufbau zur Durchführung einer Frontalkollision mit geringfügiger seitlicher Überdeckung;
- Figur 2: in einer perspektivischen Teilansicht von innen die Karosserie-Vorbaustruktur; und
- Figur 3: eine schematische Schnittansicht entlang einer Schnittebene yz aus der Figur 2.

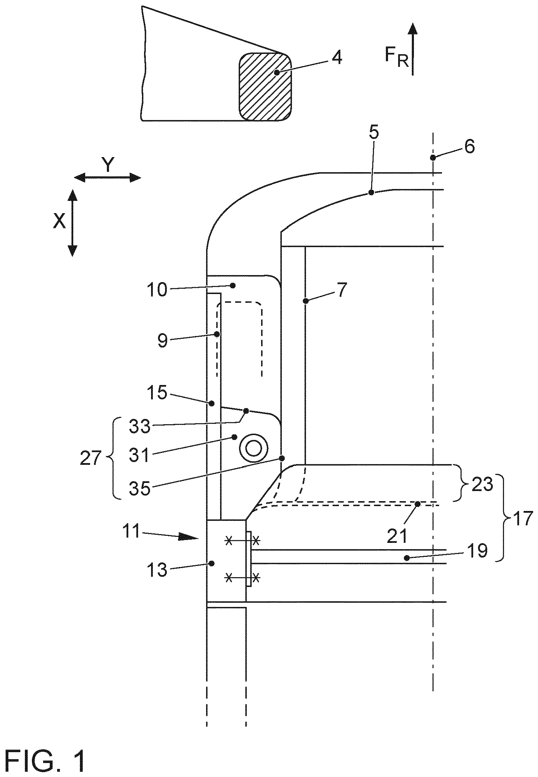

In der Fig. 1 ist ein Versuchsaufbau gezeigt, mit dem eine Fahrzeugkollision mit nur geringfügiger seitlicher Überdeckung mit einer Barriere 4 simuliert wird, bei der sich die Aufprallfläche am Fahrzeug weitgehend seitlich außerhalb eines angedeuteten frontseitigen Stoßfänger-Querträgers 5 befindet. In dem Fahrzeug sind aus Gründen der Übersichtlichkeit lediglich die zum Verständnis der Erfindung erforderlichen Bauteile angedeutet. So schließen sich an den Stoßfänger-Querträger 5 in der Fahrzeuglängsrichtung x nach hinten zwei Karosserie-Längsträger 7 an. In der Fig. 1 ist lediglich eine Fahrzeugseite der Karosserie-Vorbaustruktur gezeigt. Die nicht dargestellte rechte Seite der Karosserie-Vorbaustruktur ist mit Bezug auf die Längsmittelebene 6 spiegelbildlich ausgeführt.

Die Karosserie-Längsträger 7 bilden eine untere Längsträgerebene und verlaufen in der Fahrzeugquerrichtung y betrachtet innerhalb des jeweiligen Radhauses 10 des Fahrzeug-Vorderrades 9. Zusätzlich sind obere Radhaus-Längsträger 15 vorgesehen, die die obere Längsträgerebene bilden.

Die Karosserie-Vorbaustruktur weist zwei in der Fahrzeugquerrichtung y einander gegenüberliegende A-Säulen 11 auf, von denen in der Fig. 1 lediglich ein oberer A-Säulenknoten 13 angedeutet ist. Im oberen A-Säulenknoten 13 laufen der obere Radhaus-Längsträger 15 sowie eine Querbaugruppe 17 zusammen. In der Querbaugruppe 17 kann ein Modulquerträger 19, eine Stirnwand 21 sowie ein Wasserkasten 23 integriert sein. Der ModulQuerträger 19 ist über angedeutete Befestigungsstellen 20 bauteilsteif an dem oberen A-Säulenknoten 13 befestigt. Die Querbaugruppe 17 ist über Befestigungsstellen bauteilsteif an der A-Säule 11 befestigt. Wie aus der Figur 1 weitere hervorgeht, ist ein Inneneckbereich zwischen der Querbaugruppe 17 und dem oberen Radhaus-Längsträger 15 mit einem Federbeindom 27 überspannt. Der Federbeindom 27 ist sowohl an der Querbaugruppe 17 als auch an dem oberen Radhaus-Längsträger 15 fest angebunden, wodurch der Inneneckbereich zwischen der Querbaugruppe 17 und dem oberen Radhaus-Längsträger 15 bauteilsteif verstärkt ist.

Das Radhaus-Blechteil 29 schließt sich in der Fahrzeuglängsrichtung x nach fahrzeugvorne sowie in der Fahrzeughochrichtung z nach fahrzeugunten an den Federbeindom 27 an und verbindet den unteren Karosserie-Längsträger 7 kraftübertragend mit dem oberen Radhaus-Längsträger 15.

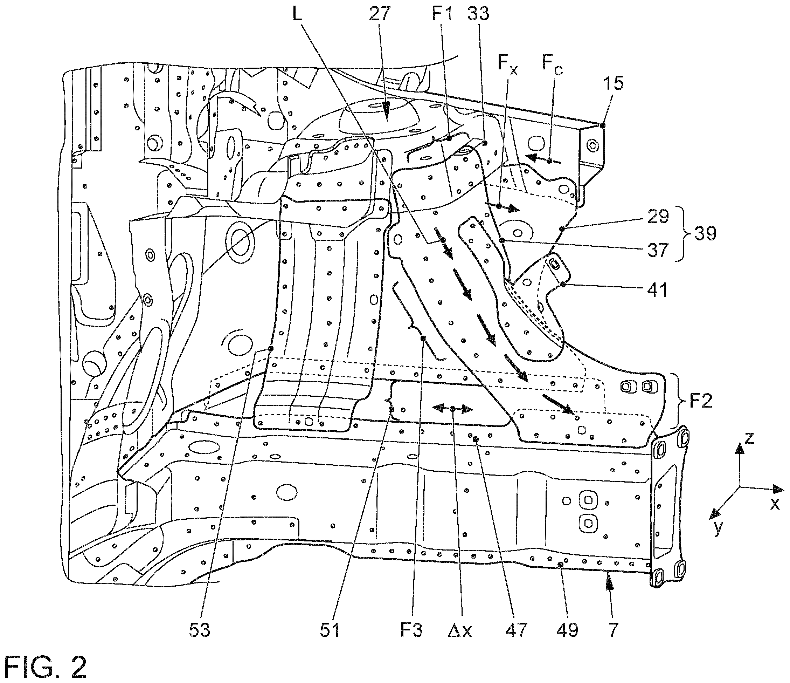

Wie aus den Figuren weiter hervorgeht, weist der als ein Blechformteil realisierte Federbeindom 27 eine obere, horizontal ausgerichtete Abstützbasis 31 auf, gegen die ein nicht gezeigter Federbein-Kopf abstützbar ist. Die Federbeindom-Abstützbasis 31 geht in der Fahrzeuglängsrichtung x nach fahrzeugvorne in eine vertikale Federbein-Vorderwand 33 (Figur 2) über, und in der Fahrzeugquerrichtung y nach fahrzeuginnen in eine vertikale Federbeindom-Innenwand 35 über.

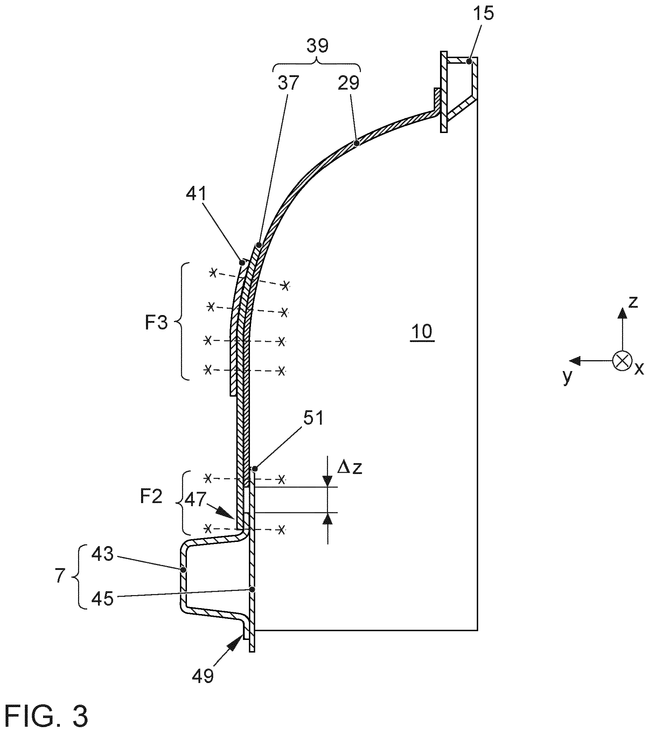

In den Figuren 1 bis 3 ist ein Blech-Zugband 37 bereitgestellt, das an einer oberen Fügestelle F1 am Federbeindom 27 (das heißt sowohl an der Federbeindom-Vorderwand 33 als auch an der Federbeindom-Innenwand 35) durch Punktschweißung angebunden ist. Das Blech-Zugband 37 ist außerdem an einer unteren Fügestelle F2 am unteren Karosserie-Längsträger 7 angebunden. Ferner ist das Blech-Zugband 37 an einer mittleren Fügestelle F3 unmittelbar am Radhaus-Blechteil 29 angebunden, und zwar unter Bildung einer Doppelwandstruktur 39 (Figur 3), die sich durchgängig zwischen dem Federbeindom 27 und dem unteren Karosserie-Längsträger 7 erstreckt und in der das Radhaus-Blechteil 29 und das Blech-Zugband 37 großflächig in Anlage sind.

Zur Verstärkung der Doppelwandstruktur 39 ist in der Figur 2 ein Verstärkungs-Blechteil 41 bereitgestellt, wodurch sich ein Dreiblechaufbau ergibt, bei dem das Radhaus-Blechteil 29, das Blech-Zugband 37 und das Verstärkungs-Blechteil 41 miteinander durch Punktschweißung verbunden sind. Der Dreiblechaufbau ist in der Figur 2 sowohl mit Abstand zur oberen Fügestelle F1 als auch mit Abstand zur unteren Fügestelle F2 angeordnet. Das Verstärkungs-Blechteil 41 wirkt in der Figur 2 zusätzlich als Tragkonsole, auf die ein nicht dargestelltes Antriebsaggregat abstützbar ist.

Wie aus der Figur 2 weiter hervorgeht, ist die untere Fügestelle F2 um einen Längsversatz Δx vor der oberen Fügestelle F1 angeordnet.

Aus der Figur 3 geht zudem hervor, dass der untere Karosserie-Längsträger 7 ein U-Profilteil 43 aufweist, das in der Fahrzeugquerrichtung y nach fahrzeugaußen offen ist und an oberen und unteren Flanschverbindungen 47, 49 mit einem äußeren Deckteil 45 geschlossen ist. In der Figur 2 oder 3 überragt das äußere Deckteil 45 die obere Flanschverbindung 47 mit einem Überstand 51 nach fahrzeugoben. Bei diesem Blechteil-Aufbau ist die untere Fügestelle F2 wie folgt realisiert: so ist in der unteren Fügestelle F2 der Deckteil-Überstand 51 am Radhaus-Blechteil angebunden, und zwar mit einem Höhenversatz Δz oberhalb der oberen Flanschverbindung 47 des Karosserie-Längsträgers 7. Das Blech-Zugband 37, das Radhaus-Blechteil 29 sowie der Deckteil-Überstand 51 bilden dabei einen Dreiblechaufbau, bei dem das Blech-Zugband 37, das Radhaus-Blechteil 29 und der Deckteil-Überstand 51 miteinander durch Punktschweißverbindung verbunden sind.

Zudem bildet in der unteren Fügestelle F2 das Blech-Zugband zusammen mit der oberen Flanschverbindung 47 des Karosserie-Längsträgers 7 ebenfalls einen Dreiblechaufbau, bei dem das Blech-Zugband 37, das Deckteil 45 sowie das U-Profilteil 43 miteinander durch Punktschweißung verbunden sind.

In der Figur 2 ist neben dem Blech-Zugband 37 auch ein weiteres Verstärkungs-Blechteil 53 verbaut. Das Verstärkungs-Blechteil 53 verbindet den Federbeindom 27 (das heißt die Federbeindom-Innenwand 35) kraftübertragend mit dem unteren Karosserie-Längsträger 7. In der Figur 2 bildet das Verstärkungs-Blechteil 53 zusammen mit dem Radhaus-Blechteil 29 ebenfalls eine bauteilsteife Doppelwandstruktur, über die im Frontalcrashfall mit geringfügiger seitlicher Überdeckung Zug- und/oder Druckkräfte zwischen der oberen Lenkerebene und der unteren Lenkerebene übertragen werden können.

Bei einem Frontalcrash mit geringer seitlicher Überdeckung wird der Federbeindom 27 mit einer Crashkraft F_{C} (Figur 2) in der Fahrzeuglängsrichtung (x) nach fahrzeughinten belastet. Der nach fahrzeughinten wirkenden Crashkraft F_{C} wirkt eine Zugkraft entgegen, die entlang eines von dem Blech-Zugband 37 bereitgestellten Lastpfads L (Figur 2) verläuft. Dadurch kann eine crashbedingte Verlagerung des Federbeindoms (27) nach fahrzeughinten vermieden werden. Wie aus der Figur 2 hervorgeht verläuft der Lastpfad L nach fahrzeughinten in Richtung auf die obere Lenkerebene, in der der Federbeindom 27 angeordnet ist. Die auf den Federbeindom 27 wirkende Zugkraft weist daher eine Zugkraft-Längskomponente Fₓ auf, die der Crashkraft F_{C} entgegenwirkt.

### Bezugszeichenliste

- 4: Barriere
- 5: Stoßfänger-Querträger
- 6: Längsmittelebene
- 7: Karosserie-Längsträger
- 9: Fahrzeugrad
- 10: Radhaus-Innenraum
- 11: A-Säule
- 13: oberer A-Säulenknoten
- 15: oberer Radhaus-Längsträger
- 17: Querbaugruppe
- 19: Modulquerträger
- 21: Stirnwand
- 23: Wasserkasten
- 27: Federbeindom
- 29: Radhaus-Blechteil
- 31: Federbeindom-Abstützbasis
- 33: Federbeindom-Vorderwand
- 35: Federbeindom-Innenwand
- 37: Blech-Zugband
- 39: Doppelwandstruktur
- 41: Verstärkungs-Blechteil
- 43: U-Profilteil
- 45: Deckteil
- 47, 49: obere/untere Flanschverbindung
- 51: Überstand
- 53: Verstärkungs-Blechteil
- F1, F2, F3: Fügestellen des Blech-Zugbands
- F_{c}: Crashkraft
- Fₓ: Zugkraft-Längskomponente
- Δx: Längsversatz
- Δz: Höhenversatz
- L: Lastpfad

## Patentansprüche

1. Karosserie-Vorbaustruktur für ein zweispuriges Fahrzeug, mit einer A-Säule (11), von der ein oberer Radhaus-Längsträger (15) in der Fahrzeuglängsrichtung (x) nach fahrzeugvorne abragt und von der ein mit Bezug auf den oberen Radhaus-Längsträger (15) nach fahrzeuginnen versetzter, unterer Karosserie-Längsträger (7) in der Fahrzeuglängsrichtung (x) nach fahrzeugvorne abragt, wobei sich in der Fahrzeugquerrichtung (y) eine Querbaugruppe (17) erstreckt, und in einem Inneneckbereich zwischen der Querbaugruppe (17) und dem oberen Radhaus-Längsträger (15) ein Federbeindom (27) angeordnet ist, an dem sich in der Fahrzeuglängsrichtung (x) nach fahrzeugvorne und in der Fahrzeughochrichtung (z) nach fahrzeugunten ein, das Radhaus-Innere (10) begrenzendes Radhaus-Blechteil (29) anschließt, das den unteren Karosserie-Längsträger (7) mit dem oberen Radhaus-Längsträger (15) verbindet, wobei in einem Frontalcrash, insbesondere mit geringer seitlicher Überdeckung, der Federbeindom (27) mit einer Crashkraft (F_{C}) in der Fahrzeuglängsrichtung (x) belastet ist, **dadurch gekennzeichnet, dass** die Karosserie-Vorbaustruktur ein Blech-Zugband (37) aufweist, das den Federbeindom (27) mit dem unteren Karosserie-Längsträger (7) kraftübertragend verbindet, und dass das Blech-Zugband (37) im Frontalcrashfall einen Lastpfad (L) bereitstellt, über den eine der Crashkraft (F_{C}) entgegenwirkende Zugkraft (Fₓ) auf den Federbeindom (27) einwirkt, um eine crashbedingte Verlagerung des Federbeindoms (27) nach fahrzeughinten zu vermeiden.

2. Karosserie-Vorbaustruktur nach Anspruch 1, **dadurch gekennzeichnet, dass** das Blech-Zugband (37) an einer oberen Fügestelle (F1) am Federbeindom (27) angebunden ist, und dass das Blech-Zugband (37) an einer unteren Fügestelle (F2) am unteren Karosserie-Längsträger (7) angebunden ist, und/oder dass insbesondere das Blech-Zugband (37) an einer mittleren Fügestelle (F3) zwischen den oberen und unteren Fügestellen (F1, F2) am Radhaus-Blechteil (29) angebunden ist, und/oder dass insbesondere jede der Fügestellen (F1, F2, F3) eine Vielzahl von Punktschweißstellen aufweist.

3. Karosserie-Vorbaustruktur nach Anspruch 2, **dadurch gekennzeichnet, dass** das Blech-Zugband (37) und das Radhaus-Blechteil (29) an der mittleren Fügestelle (F3) eine Doppelwandstruktur (39) bildet, die sich durchgängig zwischen dem Federbeindom (27) und dem unteren Karosserie-Längsträger (7) erstreckt und in der das Radhaus-Blechteil (29) und das Blech-Zugband (37) großflächig in Anlage sind.

4. Karosserie-Vorbaustruktur nach Anspruch 3, **dadurch gekennzeichnet, dass** zur Verstärkung der Doppelwandstruktur (39) ein Verstärkungs-Blechteil (41) bereitgestellt ist, und zwar unter Bildung eines Dreiblechaufbaus, bei dem das Radhaus-Blechteil (29), das Blech-Zugband (37) und das Verstärkungs-Blechteil (41) miteinander, insbesondere in Punktschweißverbindung, verbunden sind, und dass insbesondere der Dreiblechaufbau mit Abstand zur oberen Fügestelle (F1) und mit Abstand zur unteren Fügestelle (F2) angeordnet ist, und/oder dass insbesondere das Verstärkungs-Blechteil (41) eine Tragkonsole ist, das eine Funktionseinheit, insbesondere ein Antriebsaggregat, trägt.

5. Karosserie-Vorbaustruktur nach einem der Ansprüche 2 bis 4, **dadurch gekennzeichnet, dass** die untere Fügestelle (F2) um einen Längenversatz (Δx) vor der oberen Fügestelle (F1) angeordnet ist, so dass sich im Frontalcrash der Lastpfad (L) vom unteren Karosserie-Längsträger (7) nach fahrzeughinten in Richtung obere Lenkerebene erstreckt, in der der Federbeindom (27) angeordnet ist, und zwar unter Bildung einer Zugkraftkomponente (F_{X}), die der Crashkraft (F_{C}) entgegenwirkt.

6. Karosserie-Vorbaustruktur nach einem der vorhergehenden Ansprüche, **dadurch gekennzeichnet, dass** der untere Karosserie-Längsträger (7) ein U-Profilteil (43) aufweist, das in der Fahrzeugquerrichtung (y) nach fahrzeugaußen offen ist, und dass das U-Profilteil (43) an einer oberen und unteren Flanschverbindung (47, 49) mit einem äußeren Deckteil (45) geschlossen ist, und dass das äußeren Deckteil (45) die obere Flanschverbindung (47) mit einem Überstand (51) nach fahrzeugoberen überragt, und dass insbesondere in der unteren Fügestelle (F2) der Deckteil-Überstand (51) am Radhaus-Blechteil (29) angebunden ist, und zwar mit Höhenversatz (Δz) oberhalb der oberen Flanschverbindung (47).

7. Karosserie-Vorbaustruktur nach Anspruch 6, **dadurch gekennzeichnet, dass** das Blech-Zugband (37), das Radhaus-Blechteil (29) und der Deckteil-Überstand (51) einen Dreiblechaufbau bilden, bei dem das Blech-Zugband (37), das Radhaus-Blechteil (29) und der Deckteil-Überstand (51) miteinander verbunden sind.

8. Karosserie-Vorbaustruktur nach Anspruch 6 oder 7, **dadurch gekennzeichnet, dass** das Blech-Zugband (37) zusammen mit der oberen Flanschverbindung (47) einen Dreiblechaufbau bildet, bei dem das Blech-Zugband (37), das Deckteil (45) und das U-Profilteil (43) miteinander verbunden sind.

9. Karosserie-Vorbaustrukturnach einem der vorhergehenden Ansprüche, **dadurch gekennzeichnet, dass** die Karosserie-Vorbaustruktur ein Verstärkungs-Blechteil (53) aufweist, das separat vom Blech-Zugband (37) den Federbeindom (27) kraftübertragend mit dem unteren Karosserie-Längsträger (7) verbindet, und/oder dass der Federbeindom (27) eine horizontal ausgerichtete obere Abstützbasis (31) aufweist, die in Fahrzeuglängsrichtung (x) nach fahrzeugvorne in eine vertikale Federbein-Vorderwand (33) übergeht, und in der Fahrzeugquerrichtung (y) nach fahrzeuginnen in eine vertikale Federbeindom-Innenwand (35) übergeht, und/oder dass das Verstärkungs-Blechteil (53) mit Abstand zum Blech-Zugband (37) an der Federbeindom-Innenwand (35) angebunden ist, und/oder dass das Blech-Zugband (37) sowohl an der Federbeindom-Innenwand (35) als auch an der Federbeindom-Vorderwand (33) angebunden ist.

## Claims

1. Body front-end structure for a two-track vehicle, the structure comprising an A-pillar (11) from which an upper wheel housing side member (15) projects toward the front of the vehicle in the vehicle longitudinal direction (x) and from which a lower body side member (7), which is offset toward the inside of the vehicle with respect to the upper wheel housing side member (15), projects toward the front of the vehicle in the vehicle longitudinal direction (x), with a transverse assembly (17) extending in the vehicle transverse direction (y), and a spring strut dome (27) being arranged in an inner corner region between the transverse assembly (17) and the upper wheel housing side member (15), which dome is adjoined in the vehicle longitudinal direction (x) toward the front of the vehicle and in the vehicle vertical direction (z) toward the bottom of the vehicle by the wheel housing panel (29) which delimits the wheel housing interior (10) and which connects the lower body side member (7) to the upper wheel housing side member (15), in a head-on crash, in particular with a slight lateral overlap, the spring strut dome (27) being loaded with a crash force (F_{c}) in the vehicle longitudinal direction (x), **characterized in that** the body front-end structure has a panel tension strip (37) which connects the spring strut dome (27) to the lower body side member (7) in a force-transmitting manner, and **in that**, in the event of a head-on crash, the panel tension strip (37) provides a load path (L) via which a tensile force (Fₓ) counteracting the crash force (F_{c}) acts on the spring strut dome (27) in order to avoid a crash-induced displacement of the spring strut dome (27) toward the rear of the vehicle.

2. Body front-end structure according to claim 1, **characterized in that** the panel tension strip (37) is attached to the spring strut dome (27) at an upper joint (F1), and **in that** the panel tension strip (37) is attached to the lower body side member (7) at a lower joint (F2), and/or **in that** in particular the panel tension strip (37) is attached to the wheel housing panel (29) at a central joint (F3) between the upper and lower joints (F1, F2), and/or **in that** in particular each of the joints (F1, F2, F3) has a plurality of spot welds.

3. Body front-end structure according to claim 2, **characterized in that** the panel tension strip (37) and the wheel housing panel (29) form a double-wall structure (39) at the central joint (F3), which structure extends continuously between the spring strut dome (27) and the lower body side member (7) and in which the wheel housing panel (29) and the panel tension strip (37) are in contact with one another over a large surface area.

4. Body front-end structure according to claim 3, **characterized in that** a reinforcement panel (41) is provided to reinforce the double-wall structure (39), namely to form a triple-panel structure, in which the wheel housing panel (29), the panel tension strip (37) and the reinforcement panel (41) are connected to one another, in particular in a spot weld connection, and **in that** in particular the triple-panel structure is arranged at a distance from the upper joint (F1) and at a distance from the lower joint (F2), and/or **in that** in particular the reinforcement panel (41) is a support bracket which carries a functional unit, in particular a drive unit.

5. Body front-end structure according to any of claims 2 to 4,
**characterized in that** the lower joint (F2) is arranged in front of the upper joint (F1) by a length offset (Δx), so that, in the head-on crash, the load path (L) extends from the lower body side member (7) toward the rear of the vehicle in the direction of the upper link plane in which the spring strut dome (27) is arranged, namely to form a tensile force component (Fₓ) which the crash force (F_{c}) counteracts.

6. Body front-end structure according to any of the preceding claims, **characterized in that** the lower body side member (7) has a channel part (43) which is open toward the outside of the vehicle in the vehicle transverse direction (y), and **in that** the channel part (43) is closed with an outer cover part (45) at an upper and a lower flange connection (47, 49), and **in that** the outer cover part (45) projects beyond the upper flange connection (47) toward the top of the vehicle with an overhang (51), and **in that**, in particular in the lower joint (F2), the cover part overhang (51) is attached to the wheel housing panel (29), namely with a height offset (Δz) above the upper flange connection (47).

7. Body front-end structure according to claim 6, **characterized in that** the panel tension strip (37), the wheel housing panel (29) and the cover part overhang (51) form a triple-panel structure in which the panel tension strip (37), the wheel housing panel (29) and the cover part overhang (51) are connected to one another.

8. Body front-end structure according to either claim 6 or claim 7, **characterized in that** the panel tension strip (37) together with the upper flange connection (47) forms a three-panel structure in which the panel tension strip (37), the cover part (45) and the channel part (43) are connected to one another.

9. Body front-end structure according to any of the preceding claims, **characterized in that** the body front-end structure has a reinforcement panel (53) which connects the spring strut dome (27) to the lower body side member (7) in a force-transmitting manner separately from the panel tension strip (37), and/or **in that** the spring strut dome (27) has a horizontally oriented upper support base (31) which transitions into a vertical spring strut front wall (33) toward the front of the vehicle in the vehicle longitudinal direction (x), and transitions into a vertical spring strut dome inner wall (35) toward the inside of the vehicle in the vehicle transverse direction (y), and/or **in that** the reinforcement panel (53) is attached to the spring strut dome inner wall (35) at a distance from the panel tension strip (37), and/or **in that** the panel tension strip (37) is attached both to the spring strut dome inner wall (35) and also to the spring strut dome front wall (33).

## Revendications

1. Structure avant de carrosserie pour un véhicule à deux voies, avec une colonne A (11), depuis laquelle un longeron de passage de roue supérieur (15) fait saillie dans la direction longitudinale de véhicule (x) vers l'avant du véhicule et depuis laquelle un longeron de carrosserie inférieur (7) décalé vers l'intérieur du véhicule par rapport au longeron de passage de roue supérieur (15) fait saillie dans la direction longitudinale de véhicule (x) vers l'avant du véhicule, dans laquelle un module transversal (17) s'étend dans la direction transversale du véhicule (y) et un dôme de jambe de suspension (27) est agencé dans une zone de coin intérieur entre le module transversal (17) et le longeron de passage de roue supérieur (15), sur lequel dôme se raccorde, dans la direction longitudinale du véhicule (x) vers l'avant du véhicule et dans la direction de la hauteur du véhicule (z) vers le dessous du véhicule, une pièce en tôle de passage de roue (29) délimitant l'intérieur du passage de roue, (10), laquelle relie le longeron de carrosserie inférieur (7) au longeron de passage de roue supérieur (15), dans laquelle, lors d'une collision frontale, en particulier avec un faible recouvrement latéral, le dôme de jambe de suspension (27) reçoit une force de collision (F_{c}) dans la direction longitudinale du véhicule (x), **caractérisée en ce que** la structure avant de carrosserie présente une bande de traction en tôle (37), qui relie le dôme de jambe de suspension (27) au longeron de carrosserie inférieur (7) de façon à transmettre les forces et **en ce que** la bande de traction en tôle (37), en cas de collision frontale, fournit un chemin de charge (L), par le biais duquel une force de traction (Fₓ) contrecarrant la force de collision (F_{c}) agit sur le dôme de jambe de suspension (27), afin d'éviter un déplacement dû à la collision du dôme de jambe de suspension (27) vers l'arrière du véhicule.

2. Structure avant de carrosserie selon la revendication 1, **caractérisée en ce que** la bande de traction en tôle (37) est amarrée à un point d'assemblage supérieur (F1) sur le dôme de jambe de suspension (27) et **en ce que** la bande de traction en tôle (37) est amarrée à un point d'assemblage inférieur (F2) au longeron de carrosserie inférieur (7) et/ou **en ce que**, en particulier, la bande de traction en tôle (37) est amarrée à un point d'assemblage intermédiaire (F3) entre les points d'assemblage supérieur et inférieur (F1, F2) sur la pièce en tôle de passage de roue (29) et/ou **en ce que**, en particulier, chacun des points d'assemblage (F1, F2, F3) présente une pluralité d'emplacements de soudage par point.

3. Structure avant de carrosserie selon la revendication 2, **caractérisée en ce que** la bande de traction en tôle (37) et la pièce en tôle de passage de roue (29) forment sur le point d'assemblage intermédiaire (F3) une structure à double paroi (39), qui s'étend en continu entre le dôme de jambe de suspension (27) et le longeron de carrosserie inférieur (7) et dans laquelle la pièce en tôle de passage de roue (29) et la bande de traction en tôle (37) sont installées à grande échelle.

4. Structure avant de carrosserie selon la revendication 3, **caractérisée en ce que**, pour le renforcement de la structure à double paroi (39), une pièce de tôle de renforcement (41) est fournie et à savoir en formant une structure à trois tôles, dans laquelle la pièce en tôle de passage de roue (29), la bande de traction en tôle (37) et la pièce en tôle de renforcement (41) sont reliées l'une à l'autre, en particulier en assemblage par soudage par point et **en ce que**, en particulier, la structure à trois tôles est agencée à une distance par rapport au point d'assemblage supérieur (F1) et à une distance par rapport au point d'assemblage inférieur (F2) et/ou **en ce que**, en particulier, la pièce en tôle de renforcement (41) est une console de support, qui supporte une unité fonctionnelle, en particulier un groupe moteur.

5. Structure avant de carrosserie selon l'une quelconque des revendications 2 à 4, **caractérisée en ce que** le point d'assemblage inférieur (F2) est agencé avec un décalage en longueur (Δx) devant le point d'assemblage supérieur (F1), de sorte que, lors d'une collision frontale, le chemin de charge (L) s'étende du longeron de carrosserie inférieur (7) vers l'arrière du véhicule en direction du plan de direction supérieur, dans lequel le dôme de jambe de suspension (27) est agencé et à savoir en formant une composante de force de traction (Fₓ), qui contrecarre la force de collision (F_{c}).

6. Structure avant de carrosserie selon l'une quelconque des revendications précédentes, **caractérisée en ce que** le longeron de carrosserie inférieur (7) présente une pièce profilée en U (43), qui est ouverte vers l'extérieur du véhicule dans la direction transversale du véhicule (y) et **en ce que** la pièce profilée en U (43) est fermée au niveau de raccords à bride supérieur et inférieur (47, 49) avec une pièce de recouvrement extérieure (45) et **en ce que** la pièce de recouvrement extérieure (45) dépasse du raccord à bride supérieur (47) d'une saillie (51) vers le haut du véhicule et **en ce que**, en particulier, la saillie de pièce de recouvrement (51) est amarrée à la pièce de tôle de passage de roue (29) dans le point d'assemblage inférieur (F2) et à savoir avec un décalage en hauteur (Δz) au-dessus du raccord à bride supérieur (47).

7. Structure avant de carrosserie selon la revendication 6, **caractérisée en ce que** la bande de traction en tôle (37), la pièce en tôle de passage de roue (29) et la saillie de pièce de recouvrement (51) forment une structure à trois tôles, dans laquelle la bande de traction en tôle (37), la pièce en tôle de passage de roue (29) et la saillie de pièce de recouvrement (51) sont reliées l'une à l'autre.

8. Structure avant de carrosserie selon la revendication 6 ou 7, **caractérisée en ce que** la bande de traction en tôle (37) forme, conjointement avec le raccord à bride supérieur (47), une structure à trois tôles, dans laquelle la bande de traction en tôle (37), la pièce de recouvrement (45) et la pièce profilée en U (43) sont reliées l'une à l'autre.

9. Structure avant de carrosserie selon l'une quelconque des revendications précédentes, **caractérisée en ce que** la structure avant de carrosserie présente une pièce en tôle de renforcement (53), qui, séparément de la bande de traction en tôle (37), relie le dôme de jambe de suspension (27) au longeron de carrosserie inférieur (7) de manière à transmettre les forces et/ou **en ce que** le dôme de jambe de suspension (27) présente une base d'appui (31) supérieure orientée horizontalement, qui se transforme dans la direction longitudinale du véhicule (x) vers l'avant du véhicule en une paroi avant de jambe de suspension verticale (33) et se transforme dans la direction transversale du véhicule (y) vers l'intérieur du véhicule en une paroi interne de dôme de jambe de suspension verticale (35) et/ou **en ce que** la pièce en tôle de renforcement (53) est amarrée à distance de la bande de traction en tôle (37) sur la paroi interne de dôme de jambe de suspension (35) et/ou **en ce que** la bande de traction en tôle (37) est amarrée aussi bien à la paroi interne de dôme de jambe de suspension (35) qu'à la paroi avant de dôme de jambe de suspension (33).
